# FASCICULE DE BREVET EUROPEEN

(11) **EP 0 699 911 B1**
(45) Date de publication et mention de la délivrance du brevet: **23.12.1998**
(21) Numéro de dépôt: 95401987.3
(22) Date de dépôt: 31.08.1995
(51) Int. Cl.: G01P 3/486

(54) **Tachymètre perfectionné et son application notamment aux machines tournantes de centrales électriques**
Verbesserter Drehzahlgeber sowie seine Verwendung, insbesondere bei drehenden Maschinen in Kraftwerken
Improved tachometer and its use, especially for rotary machines in power plants

(30) Priorité: 01.09.1994 FR 9410533
(43) Date de publication de la demande: 06.03.1996
(73) Titulaire: ELECTRICITE DE FRANCE Service National, 75008 Paris (FR)
(72) Inventeur: Bernard, Patrick, F-91470 Limours (FR); Atton, Jean-Pierre, F-91550 Paray Vieille Poste (FR)
(74) Mandataire: Moncheny, Michel

(56) Documents cités:
- DE-A- 3 126 023
- DE-U- 9 014 753

## Description

La présente invention concerne un tachymètre à impulsion perfectionné et, plus particulièrement, un tel tachymètre destiné à mesurer la rotation d'un organe tournant à partir d'une impulsion électrique qui est engendrée à chaque révolution de l'organe et qui est ensuite traitée électroniquement et convertie optiquement.

Dans de nombreux secteurs techniques, il est nécessaire de mesurer avec précision la rotation d'un organe tournant tel qu'un arbre, pour en mesurer la vitesse instantanée et/ou ses variations.

Tel est le cas par exemple des centrales électriques, thermiques ou nucléaires, où il est nécessaire de faire une mesure extrêmement précise de la vitesse de rotation d'une machine tournante par exemple d'un turboalternateur à chaque révolution de l'arbre et, de préférence, autour de la vitesse nominale de ce dernier, en particulier pour la surveillance des aubages des turbines basse pression afin de détecter les défauts ou les dégradations qui peuvent survenir par exemple sur les ailettes.

On utilise habituellement des tachymètres dit "top-tour", c'est-à-dire qui émettent une impulsion à chaque révolution d'un organe tournant à observer tel un arbre.

Pour le cas de l'application aux turbines basse pression des centrales électriques dont la vitesse de rotation nominale d'un arbre est habituellement de 1500 t/min, on surveille les variations de vitesse de rotation comprises entre 1498 t/min et 1502 t/min et l'on distingue alors seize classes de vitesse qui sont équiréparties dans cette fourchette autour de la vitesse de rotation nominale. Etant donné qu'en pratique une impulsion "top-tour" est délivrée à chaque révolution de l'arbre, on calcule la période de rotation à chaque tour par différence entre les instants de production de deux impulsions successives. Dans ce cas, la largeur d'une classe de vitesse vaut donc 0,25 t/min, et la précision relative minimale avec laquelle la vitesse est connue autour de la vitesse nominale vaut donc environ 1,7.10⁻⁴.

On voit donc qu'à la vitesse nominale de 1500 t/min, soit une fréquence de 25 Hz, la période vaut 40 ms.

La période de rotation étant estimée par différence des instants de survenance de deux impulsions successives, la précision sur l'instant d'occurrence ou d'apparition de chaque impulsion doit donc être meilleure que 3 µs environ.

On comprend toute les difficultés qu'il y a à faire des mesures dans de telles conditions.

Pour résoudre ce type de difficultés, on a proposé de mettre en oeuvre des tachymètres optiques ou des tachymètres électromagnétiques.

Les tachymètres optiques utilisent un laser dont le pinceau émis en direction de l'arbre est réfléchi et renvoyé par un miroir fixé sur ce dernier afin de produire à chaque tour une impulsion optique qui est détectée et traitée par des circuits électroniques appropriés pour en déduire la vitesse de rotation à chaque tour. Si une telle solution permet d'atteindre une précision bien meilleure que la précision requise, elle présente des inconvénients liés à sa fragilité, à l'encrassement de certains composants optiques notamment du miroir calé sur l'arbre et aux difficultés de réglage optique toujours délicat à conduire. Une telle solution convient bien en laboratoire, mais est particulièrement mal adaptée à un fonctionnement en milieu industriel.

Les tachymètres électroniques utilisent un capteur électromagnétique à aimant permanent devant lequel se déplace une pièce métallique portée par l'arbre afin de produire à chaque tour une impulsion électrique qui est détectée et traitée par des circuits électroniques appropriés pour en déduire la vitesse de rotation à chaque tour, telles les dents de la roue polaire d'un groupe turboalternateur. Cette solution produit un signal électrique sinusoïdal analogique proportionnel à la vitesse car commensuré à la variation du flux magnétique. Quand la vitesse augmente, la période de la sinusoïde diminue tandis que son amplitude augmente. Un tel capteur agit donc comme un convertisseur analogique vitesse/tension. Cette solution présente l'inconvénient de ne pas convenir pour des petites vitesses par exemple inférieures à 200 t/min. puisque le signal électrique est alors faible et difficile à distinguer du bruit de fond et, dans tous les cas, d'être sensible aux parasites électromagnétiques perçus par le capteur en particulier en dehors de l'impulsion due au passage de la pièce métallique.

Un tachymètre à impulsion de ce type, correspondant au préambule de la revendication 1 est décrit dans le document DE-A-31 26 023.

Le but de l'invention est de construire un tachymètre à impulsion perfectionné qui remédie à la plupart des inconvénients brièvement rappelés des solutions existantes et qui peut fonctionner en milieu industriel à environnement sévère voire hostile.

L'invention a pour objet un tachymètre à impulsion pour mesurer la rotation d'un organe tournant, comprenant un capteur inductif de proximité placé au voisinage de cet organe pour engendrer une impulsion électrique à chaque révolution de l'organe, un émetteur connecté à ce capteur pour recevoir cette impulsion électrique, la mettre en forme et la convertir en un signal optique, et une liaison à fibre optique connectée à cet émetteur et à un récepteur pour recevoir ce signal optique de l'émetteur et l'acheminer à ce récepteur pour son exploitation afin de calculer la vitesse de l'organe tournant, caractérisé en ce que ledit émetteur comprend un circuit de mise en forme pour allonger la durée de l'impulsion électrique et un convertisseur pour transformer l'impulsion électrique allongée en un signal optique.

L'invention a aussi pour objet l'application d'un tel tachymètre à la mesure de la vitesse de rotation d'un arbre de machine tournante de centrale électrique.

D'autres caractéristiques de l'invention ressortiront de la lecture de la description et des revendications qui suivent ainsi que de l'examen des figures du dessin annexé, donné seulement à titre d'exemple, où :
- la Figure 1 est un schéma synoptique d'un mode de réalisation d'un tachymètre selon l'invention;
- la Figure 2 est une vue de détail d'un mode de réalisation d'un émetteur pour un tachymètre selon l'invention;
- la Figure 3 est une vue schématique d'un mode de réalisation d'un récepteur pour un tachymètre selon l'invention; et
- la Figure 4 illustre sur les vues 4A et 4B des schémas de circuits d'alimentation utilisables pour l'émetteur et/ou le récepteur du tachymètre selon l'invention.

Les tachymètres à impulsion du type "top-tour" pour mesurer la vitesse de rotation d'un organe tournant à l'aide d'une impulsion créée à chaque révolution de l'organe et, en particulier, les tachymètres utilisés dans les centrales électriques étant bien connus dans la technique, on ne décrira dans ce qui suit que ce qui concerne directement ou indirectement l'invention. Pour le surplus, l'Homme du Métier du secteur technique considéré puisera dans les solutions classiques courantes à sa disposition pour faire face aux problèmes particuliers auxquels il est confronté.

Dans ce qui suit, on utilise toujours un même numéro de référence pour identifier un élément homologue quel que soit le mode de réalisation ou sa variante d'exécution.

Pour la commodité de l'exposé, on décrira successivement chacun des constituants d'un tachymètre perfectionné selon l'invention avant d'en exposer la construction au besoin, et le fonctionnement.

Un tachymètre à impulsion selon l'invention comprend, essentiellement, un capteur 10 inductif de proximité placé au voisinage d'un organe tournant tel un arbre A pour engendrer une impulsion 100 électrique à chaque révolution de cet organe, un émetteur 20 connecté à ce capteur pour recevoir cette impulsion électrique 100, la mettre en forme et la convertir en un signal optique, une liaison 30 à fibre optique connectée à cet émetteur et à un récepteur 40 pour recevoir ce signal optique de l'émetteur et l'acheminer à ce récepteur pour son exploitation afin de calculer la vitesse de l'organe.

Le capteur 10 comprend, essentiellement, un oscillateur à bobines, un circuit transistorisé de traitement de mise en forme et un étage de sortie avec une borne de sortie 102.

Les bobines de l'oscillateur dont une active et une de référence montées en série, constituent la face sensible du capteur et l'oscillateur y entretient un courant alternatif qui génère un champ magnétique oscillant. A chaque fois qu'une pièce P métallique, ou autre, associée à l'organe ou arbre tournant se déplace dans le champ magnétique devant le capteur, ce champ magnétique inducteur crée des courants de Foucault ou courants induits dans cette pièce métallique qui joue alors le rôle du secondaire d'un transformateur en court-circuit; ceci entraîne un accroissement du courant inducteur d'alimentation et l'arrêt des oscillations. Un circuit transistorisé de mise en forme avec une sortie à transistor rapide NPN ou PNP, détecte la brusque variation de courant et délivre alors un signal logique de niveau constant par exemple 0 ou 1 selon l'absence ou la présence de la pièce métallique. Un tel signal logique apparaît à l'étage de sortie qui comprend de préférence notamment un démodulateur connecté à la sortie de l'oscillateur. Les bobines en série de l'oscillateur sont branchées en parallèle à la fois sur deux condensateurs en série et sur deux résistances en série, et les bornes communes aux bobines, condensateurs et résistances sont reliées aux entrées de l'oscillateur. Le point commun aux bobines en série et le point commun aux condensateurs sont mis à la masse. Le point commun aux résistances est relié à l'entrée du démodulateur par l'intermédiaire d'un amplificateur.

L'émetteur 20 comprend essentiellement un circuit 21 de mise en forme pour allonger la durée de l'impulsion électrique 100, et un convertisseur 22 pour transformer l'impulsion électrique allongée en un signal optique. Il comprend aussi une borne d'entrée 201 et une borne de sortie 202.

Le circuit de mise en forme 21 comprend, essentiellement, un amplificateur opérationnel 211, une diode 212 bouclant la sortie de l'amplificateur opérationnel 211 à son entrée, et un commutateur 213 programmable monté en série entre la diode 212 et l'entrée de l'amplificateur opérationnel 211.

Le commutateur programmable 213 comprend un interrupteur 2131 électronique et un circuit pilote 2132 qui le commande. Comme on le voit en examinant le schéma de détail de la Figure 2, le circuit pilote 2132 comprend notamment un premier et un second retardateurs ou "timers" de préférence réunis dans un même composant 2130. Le circuit pilote comprend aussi deux amplificateurs opérationnels connectés au composant 2130 et à l'interrupteur 2131 et qui servent uniquement à inverser les impulsions pour qu'elles soient prises en en compte par l'un ou l'autre de ces composant et interrupteur. La durée de l'état dans lequel reste le premier timer est réglée à l'aide d'un montage RC entre par exemple zéro et quelques millisecondes environ et l'importance du retard est ajustée à l'aide d'un potentiomètre entre par exemple zéro et cinquante millisecondes environ. Le second timer délivre une impulsion "allongée" de "largeur" fixe obtenue par un montage RC, par exemple 1,6 ms, suffisante pour commander l'ouverture de l'interrupteur verrouillant la boucle.

Ce circuit de mise en forme se comporte comme un circuit monostable auquel un effet mémoire est introduit par la diode. En l'absence d'impulsion électrique en provenance du capteur c'est-à-dire lorsque le niveau logique est bas, situation qui correspond à l'absence de pièce métallique, la sortie de l'amplificateur reste à l'état bas. Quand une impulsion du capteur arrive à l'instant du passage de la pièce, le front montant de l'impulsion franchit le seuil de référence et la sortie du capteur bascule à l'état haut. L'état haut de la sortie est aussitôt transmis à l'entrée positive de l'amplificateur qui boucle : la sortie de l'amplificateur reste toujours à l'état haut même si l'impulsion est passée et que le niveau bas produit par le capteur est revenu. On voit donc que la sortie de l'amplificateur reste verrouillée à l'état haut quel que soit l'état du capteur excité ou non. Pour débloquer l'amplificateur, il suffit d'ouvrir la boucle, quand il n'y a pas d'impulsion provenant du capteur, à l'aide du commutateur programmable qui est commandé par une impulsion allongée arrivant en retard par rapport à l'impulsion initiale du capteur.

A l'arrivée d'une impulsion du capteur (front montant), l'amplificateur bascule et se verrouille à l'état haut. Cette impulsion du capteur déclenche aussi le premier timer dont la sortie reste à l'état haut pendant la durée réglable et avec le retard choisi. Quand le premier timer bascule au bout du délai préétabli, il déclenche le second timer qui délivre l'impulsion "allongée" de "largeur" fixe suffisante pour commander l'ouverture de l'interrupteur électronique verrouillant la boucle. On observera qu'il faut que le délai au bout duquel l'impulsion allongée, par exemple de 1,6 ms, est produite après l'arrivée de l'impulsion du capteur, soit inférieur à la période minimale à mesurer. Si tel n'était pas le cas, la durée des impulsions allongées serait plus longue que l'intervalle qui sépare deux impulsions successives en provenance du capteur.

L'impulsion du capteur étant passée et l'interrupteur étant ouvert, la sortie de l'amplificateur opérationnel rebascule à l'état bas.

L'interrupteur se referme presque aussitôt mais la sortie de l'amplificateur opérationnel reste à l'état bas puisque son entrée positive est à l'état bas. Il suffit alors d'attendre la venue de l'impulsion suivante du capteur pour que le processus se reproduise.

Le convertisseur 22 telle une photodiode émettrice ou similaire, est alimenté par un transistor de commutation rapide dont le collecteur est connecté par l'intermédiaire d'un potentiomètre. L'intensité de la lumière émise est ajustée au mieux en fonction des caractéristiques de la liaison à fibre optique, en particulier de sa longueur.

On observera en examinant la Figure 2 qu'afin d'éliminer tout retard de commutation, le signal de commande appliqué à la base du transistor est directement prélevé au niveau de l'entrée positive de l'amplificateur opérationnel.

On saisit immédiatement tout l'intérêt de ce circuit. Le front montant originel de l'impulsion est conservé pour déclencher le circuit à transistor qui alimente le convertisseur qui transforme l'impulsion électrique allongée en un signal optique.

De préférence, l'émetteur 20 comprend un circuit auxiliaire 23 pour contrôler l'occurrence des impulsions électriques du capteur. On utilise pour cela au moins une sortie électrique TTL (Transistor-Transistor-Logic) reliée à un connecteur normalisé BNC. Le signal de sortie disponible peut être à front montant déclenchant ou bien à front descendant déclenchant grâce à un inverseur de sélection interne du type OU exclusif. Au lieu d'avoir une sortie unique 232, ce circuit auxiliaire peut avoir deux sorties utilisables simultanément la sortie 232 et la sortie 232'. Ces sorties permettent par exemple de contrôler à l'oscilloscope la survenance des impulsions du capteur ou bien de commander le déclenchement d'un stroboscope dont les éclairs lumineux sont synchronisés et verrouillés à la vitesse de rotation instantanée de l'arbre qui, de ce fait, apparaît alors fixe afin d'examiner à loisir la pièce ou toute autre composant solidaire de l'arbre.

La liaison à fibre optique 30 avec une entrée 301 et une sortie 302 est établie en choisissant une fibre adaptée au convertisseur 22 de manière que l'atténuation de la fibre soit minimale pour la longueur d'onde d'émission du convertisseur, par exemple 6 dB/km. De préférence, on adopte une fibre optique dont le coeur autorise une utilisation multimode et assure une transfert maximal d'énergie lumineuse.

La fibre est protégée par une gaine pour obtenir notamment une meilleure résistance mécanique, au besoin convenablement adaptée pour être de plus "durcie" de manière à pouvoir placer le cas échéant la fibre au moins localement dans un environnement hostile où règnent des radiations nucléaires.

La fibre est munie à chacune de ses extrémités entrée et sortie de connecteurs normalisés par exemple à vissage du type SMA.

Le récepteur 40 est conçu pour recevoir le signal optique engendré par l'émetteur 20 et véhiculé par la liaison 30. Le récepteur avec une borne d'entrée 401 et au moins une borne de sortie 402, comprend donc une photodiode 41 réceptrice ou similaire qui transforme le signal optique en un signal électrique sous forme d'une impulsion de durée déterminée du type TTL (Transistor-Transistor-Logic) jusqu'à une vitesse de 5 M.bauds.

Ce récepteur est pourvue d'une sortie principale où apparaissent les impulsions TTL à fronts montants déclenchants et, s'il y a lieu, d'une sortie 402' auxiliaire où apparaissent ces impulsions inversées, à fronts descendants déclenchants.

Ce sont ces sorties qui sont raccordées à des circuits appropriés de tous types classiques, pour le traitement des signaux TTL afin d'en déduire la vitesse de l'arbre.

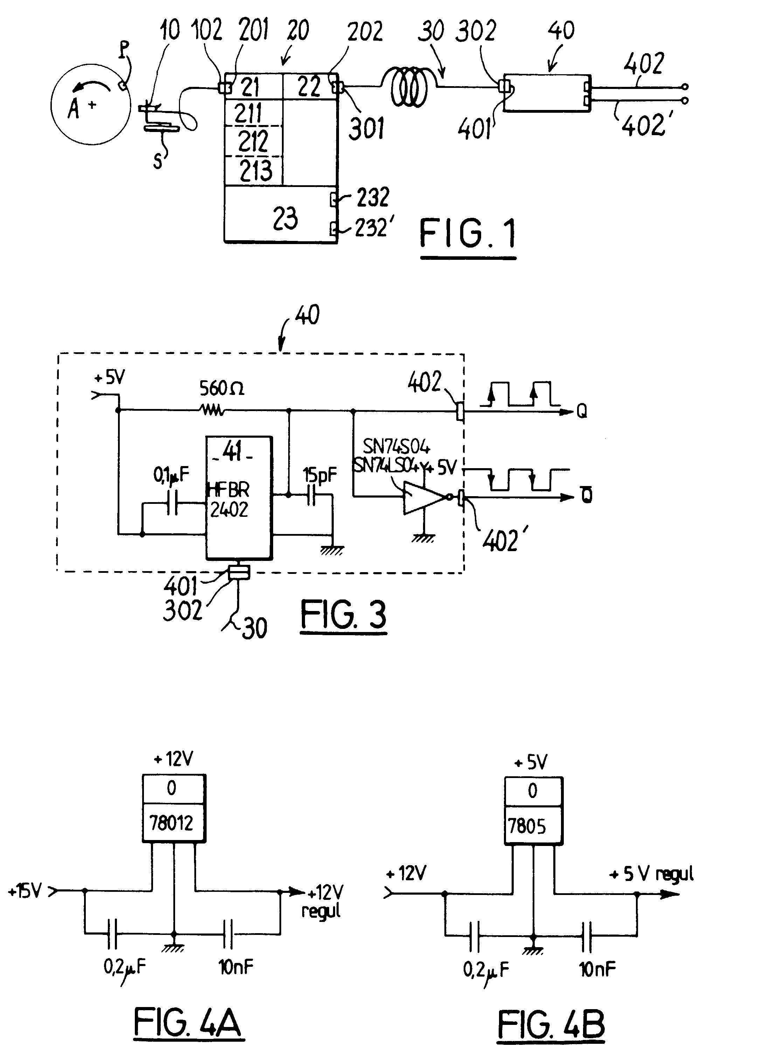

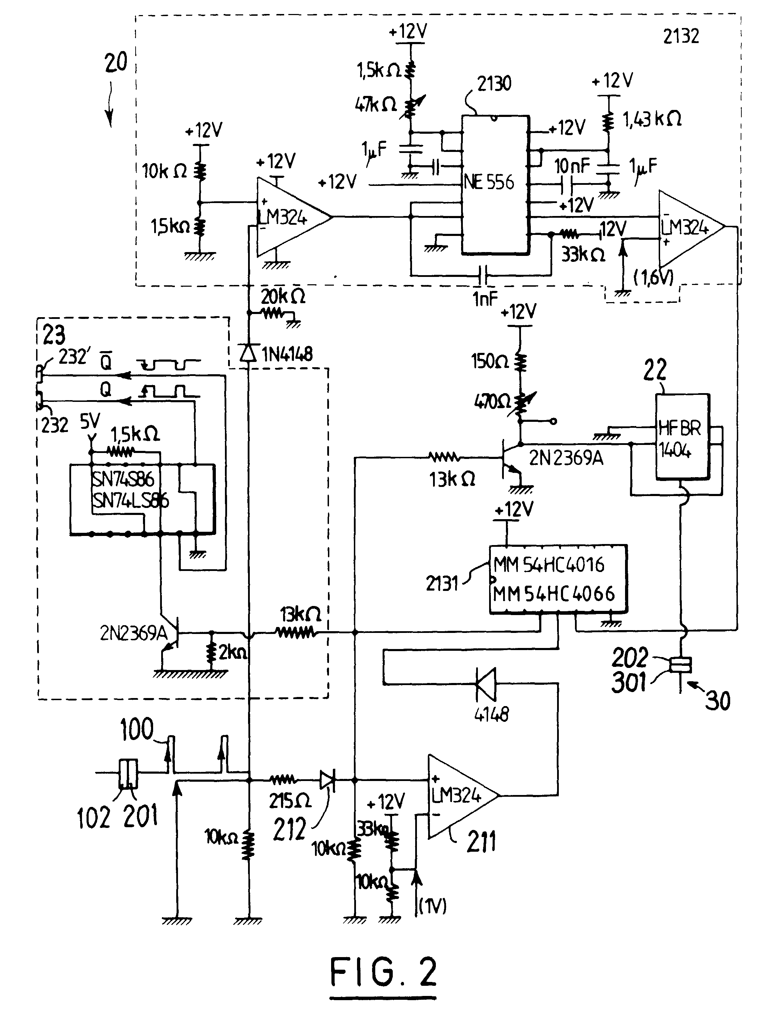

Tous les constituants du tachymètre selon l'invention sont connectés les uns aux autres comme cela apparaît à l'examen de la Figure 1 schématique. On observera que le capteur 10 est de préférence monté sur un support S réglable telle une platine micrométrique un axe (X) par exemple afin d'optimiser le signal produit par le capteur en déplaçant le capteur relativement à l'arbre.

Des alimentations de tout type classique délivrent des tensions continues 5V et 12V nécessaires au fonctionnement de l'émetteur 20 et du récepteur 40. De telles alimentations sont par exemple illustrées sur les Figures 4A et 4B.

Un capteur qui convient bien est celui qui porte la référence XS4-P08PA340-D sur le catalogue de la société TELEMECANIQUE.

Une fibre qui convient bien est celle qui porte la référence HCP MO200T sur le catalogue de la société ENSIGN-BICKFORD.

Les composants des circuits électroniques, dont certains sont référencés sur les schémas des figures selon les indications des catalogues des constructeurs, sont disponibles auprès des sociétés TEXAS INSTRUMENTS, HEWLETT PACKARD, NATIONAL SEMICONDUCTOR CORPORATION par exemple.

On voit donc que le tachymètre selon l'invention met en oeuvre un circuit pour "allonger" une impulsion et qui n'exige pas de grandes qualités de rapidité et de stabilité et dont le coût se trouve donc réduit.

Ce qui précède met bien en lumière les particularités distinctives de l'invention, l'intérêt qu'elle offre et les avantages qu'elle procure.

## Revendications

1. Tachymètre à impulsion pour mesurer la rotation d'un organe (A) tournant, comprenant un capteur (10) inductif de proximité placé au voisinage de cet organe (A) pour engendrer une impulsion (100) électrique à chaque révolution de l'organe (A), un émetteur (20) connecté à ce capteur (10) pour recevoir cette impulsion (100) électrique, la mettre en forme et la convertir en un signal optique, et une liaison (30) à fibre optique connectée à cet émetteur (20) et à un récepteur (40) pour recevoir ce signal optique de l'émetteur (20) et l'acheminer à ce récepteur (40) pour son exploitation afin de calculer la vitesse de l'organe tournant, caractérisé en ce que ledit émetteur (20) comprend un circuit (21) de mise en forme pour allonger la durée de l'impulsion électrique (100) et un convertisseur (22) pour transformer l'impulsion électrique allongée en un signal optique.

2. Tachymètre selon la revendication 1, caractérisé en ce que le circuit de mise en forme (21) comprend un amplificateur opérationnel (211), une diode (212) bouclant la sortie de l'amplificateur opérationnel (211) à son entrée, et un commutateur (213) programmable en série entre la diode (212) et l'entrée de l'amplificateur opérationnel (211).

3. Tachymètre selon la revendication 2, caractérisé en ce que le commutateur programmable (213) comprend un interrupteur (2131) électronique et un circuit pilote (2132) le commandant.

4. Tachymètre selon l'une quelconque des revendications 1 à 3, caractérisé en ce que l'émetteur (20) comprend un circuit auxiliaire (23) pour contrôler l'occurrence des impulsions électriques (100).

5. Application d'un tachymètre selon l'une quelconque des revendications précédentes à la mesure de la vitesse de rotation d'un arbre de machine tournante tel un turboalternateur de centrale électrique.

## Patentansprüche

1. Impulsdrehzahlgeber zur Messung der Drehung einer sich drehenden Einrichtung mit einem induktiven Meßfühler (10), der in der Nähe der Einrichtung (A) vorgesehen ist zur Erzeugung eines elektrischen Impulses (100) bei jeder Umdrehung der Einrichtung (A), einer Sendeeinrichtung (20), die mit dem Meßfühler (10) zur Aufnahme des elektrischen Impulses (100) verbunden ist, diesen aufbereitet und in ein optisches Signal umwandelt, einer aus einer optischen Faser bestehenden Verbindung (30), die an die Sendeeinrichtung (20) und an eine Empfangseinrichtung (40) zum Empfang des von der Sendeeinrichtung (20) ausgehenden optischen Signals und zur wahlweisen Weiterleitung an die Empfangseinrichtung (40) für dessen Auswertung zur Berechnung der Geschwindigkeit der sich drehenden Einrichtung angeschlossen ist,
dadurch gekennzeichnet, daß
die Sendeeinrichtung (20) einen Signalaufbereitungsschaltkreis (21) zur Verlängerung der Dauer des elektrischen Impulses (100) und einen Wandler (22) zur Umwandlung des verlängerten elektrischen Impulses in ein optisches Signal aufweist.

2. Impulsdrehzahlgeber nach Patentanspruch 1,
dadurch gekennzeichnet,
daß der Signalaufbereitungsschaltkreis (21) einen Operationsverstärker (211), eine Diode (212), die den Ausgang des Operationsverstärkers (211) mit dessen Eingang schleifenförmig verbindet, und einem programmierbaren Schalter (213), welcher in Serie zwischen die Diode (212) und dem Eingang des Operationsverstärkers (211) geschaltet ist, aufweist.

3. Impulsdrehzahlgeber nach Patentanspruch 2,
dadurch gekennzeichnet,
daß der programmierbare Schalter (213) einen elektronischen Schalter (2131) und einen diesen steuernden Steuerschaltkreis (2132) aufweist.

4. Impulsdrehzahlgeber nach einem der vorangehenden Patentansprüche 1 - 3,
dadurch gekennzeichnet,
daß die Sendeeinrichtung (20) einen Hilfsschaltkreis (23) zur Überwachung des Auftretens der elektonischen Impulse (100) aufweist.

5. Verwendung des Impulsdrehzahlgebers nach einem der vorangehenden Patentansprüche für die Messung der Drehzahl einer sich drehenden Maschinenwelle, insbesondere eines Turbogenerators eines Elektrizitätswerkes.

## Claims

1. Pulse-type tachometer for measuring the rotation of a rotary member (A), comprising an inductive proximity sensor (10) placed in the vicinity of this member (A) so as to generate an electric pulse (100) with each revolution of the member (A), a transmitter (20) connected to this sensor (10) so as to receive this electric pulse (100), shape it and convert it into an optical signal, and a fibre optic link (30) connected to this transmitter (20) and to a receiver (40) so as to receive this optical signal from the transmitter (20) and convey it to this receiver (40) for its utilization in order to calculate the speed of the rotary member, characterized in that the said transmitter (20) comprises a shaping circuit (21) for lengthening the duration of the electric pulse (100) and a converter (22) for transforming the lengthened electric pulse into an optical signal.

2. Tachometer according to Claim 1, characterized in that the shaping circuit (21) comprises an operational amplifier (211), a diode (212) looping the output of the operational amplifier (211) to its input, and a programmable switch (213) in series between the diode (212) and the input of the operational amplifier (211).

3. Tachometer according to Claim 2, characterized in that the programmable switch (213) comprises an electronic interrupter (2131) and a pilot circuit (2132) which controls it.

4. Tachometer according to any one of Claims 1 to 3, characterized in that the transmitter (20) comprises an auxiliary circuit (23) for checking the occurrence of the electric pulses (100).

5. Application of a tachometer according to any one of the preceding claims, to the measurement of the speed of rotation of a shaft of a rotary machine such as a power plant turboalternator.
